# EUROPÄISCHE PATENTSCHRIFT

(11) **EP 1 916 426 B1**
(45) Veröffentlichungstag und Bekanntmachung des Hinweises auf die Patenterteilung: **01.06.2011**
(21) Anmeldenummer: 07014747.5
(22) Anmeldetag: 27.07.2007
(51) Int. Cl.: F15B 13/08, F15B 13/02, F16J 15/46

(54) **Ventileinrichtung**
Valve device
Dispositif de valve

(30) Priorität: 27.10.2006 DE 102006050779
(43) Veröffentlichungstag der Anmeldung: 30.04.2008
(73) Patentinhaber: FESTO AG & Co. KG, 73734 Esslingen (DE)
(72) Erfinder: Lieb, Jürgen, 72584 Hülben (DE)
(74) Vertreter: Abel, Martin

(56) Entgegenhaltungen:
- EP-A1- 0 468 606
- DE-A1- 10 100 713
- DE-U1-202006 008 921
- FR-A1- 2 349 771
- GB-A- 304 373
- US-A- 2 970 803

## Beschreibung

Die Erfindung betrifft eine Ventileinrichtung, mit einem Ventilträger, der mindestens ein Ventil trägt, wobei zwischen dem Ventilträger und dem mindestens einen Ventil eine Dichtungseinrichtung angeordnet ist, die von mindestens einer einen im Ventilträger verlaufenden Ventilträgerkanal mit einem im Ventil verlaufenden Ventilkanal verbindenden Fluiddurchtrittsöffnung durchsetzt ist.

Eine aus der DE 202006008921 U1 bekannte Ventileinrichtung dieser Art enthält einen plattenförmigen Ventilträger, der mit einer Mehrzahl von Ventilen bestückt ist, mit denen er in Fluidverbindung steht. Eine aus mehreren Dichtungsplatten bestehende Dichtungseinrichtung sorgt für eine fluiddichte Verbindung zwischen Ventilträger und Ventilen. Die Ventile sind rechtwinkelig zu der Hauptausdehnungsebene der Dichtungsplatten an den Ventilträger angesetzt und durch Schraubverbindungsmittel oder Rastverbindungsmittel befestigt.

Bei einer aus der DE 4023806 C2 bekannten Ventileinrichtung besteht die Dichtungseinrichtung aus mehreren maskenartig strukturierten Dichtungseinheiten, die in Nuten des jeweiligen Ventils eingelegt sind, über die sie geringfügig vorstehen, sodass bei der Montage an einem Ventilträger der erforderliche Anpressdruck entsteht.

Anstelle einer Dichtungsmaske könnten auch einzelne O-Ringe in daran angepassten Aufnahmevertiefungen an der Unterseite des Ventils oder an der Oberseite des Ventilträgers angeordnet sein.

Bei all diesen Ventileinrichtungen ist es notwendig, die Ventile rechtwinkelig zur Hauptausdehnungsebene der Dichtungseinrichtung fest mit dem Ventilträger zu verspannen, um die erforderliche Dichtheit zu gewährleisten. Aufgrund von Herstellungs- und Montagetoleranzen kann gleichwohl in manchen Fällen eine Leckage mangels zu geringem Anpressdruck nicht ausgeschlossen werden.

Aus der GB 304 373 ist es im Zusammenhang mit einem Hydraulikaggregat bereits bekannt, einen einen Kolben umschließenden Dichtungsring so auszubilden, dass er mit einer ihn aufnehmenden Nut des Kolbens einen Ringraum begrenzt, der im Betrieb des Hydraulikaggregats über Kanäle mit Druckfluid beaufschlagt wird. Dadurch wird der Dichtungsring zum Erhalt einer effektiven Abdichtung nach außen gegen den ihn umschließenden Zylinder gedrückt.

Die FR 2 349 771 A1 beschreibt Maßnahmen, um eine unter Vakuum stehende Haube gegenüber einer Unterlage abzudichten. Die Haube ist an ihrer Unterseite mit einem hohlen Dichtungsring versehen, der aufblasbar ist, um sich an die Unterlage dicht anzulegen.

Es ist die Aufgabe der vorliegenden Erfindung, eine Ventileinrichtung zu schaffen, bei der selbst unter höheren Fertigungstoleranzen eine sichere Abdichtung zwischen Ventilträger und Ventil gewährleistet werden kann.

Zur Lösung dieser Aufgabe ist vorgesehen, dass die Dichtungseinrichtung mindestens eine Beaufschlagungskammer begrenzt, die mit einem unter Druck stehenden Beaufschlagungsfluid beaufschlagbar ist, um ein abdichtendes Verspannen der Dichtungseinrichtung zwischen dem Ventilträger und dem mindestens einen Ventil hervorzurufen, wobei die Dichtungseinrichtung mindestens ein die mindestens eine Beaufschlagungskammer begrenzendes, eine flächenhafte Ausdehnung aufweisendes Dichtungskissen aufweist, das unter Bildung mehrerer Fluiddurchtrittsöffnungen mehrfach durchbrochen ist und das durch die Fluidbeaufschlagung der mindestens einen Beaufschlagungskammer zum Hervorrufen des abdichtenden Verspannens aufblähbar ist.

Auf diese Weise ist es nicht erforderlich, die für eine zuverlässige Abdichtung erforderliche Pressung durch die zwischen Ventil und Ventilträger wirkende Befestigungskraft hervorzurufen. Das Verspannen der Dichtungseinrichtung zwischen dem Ventilträger und dem mindestens einen Ventil erfolgt durch Fluidbeaufschlagung der von der Dichtungseinrichtung begrenzten mindestens einen Beaufschlagungskammer, mit der Folge, dass die Dichtungseinrichtung aktiv an die abzudichtenden Komponenten angepresst werden kann. Die hierbei erzeugbare Anpresskraft ist unabhängig von der zwischen Ventil und Ventilträger wirksamen Befestigungskraft. Während es bisher erforderlich war, Ventil und Ventilträger zum Erhalt einer zuverlässigen Abdichtung mit hoher Kraft mechanisch zu verspannen, kann nun auch schon bei reduzierter Befestigungskraft eine zuverlässige Abdichtung gewährleistet werden. Somit werden nicht nur die Dichtungseinrichtung vor Überbeanspruchung geschützt, sondern auch die zur Befestigung des jeweiligen Ventils verwendeten Befestigungsmittel. Hinzu kommt, dass durch das Aufblähvermögen der Dichtungseinrichtung auch größere Toleranzen kompensiert werden können, was sich positiv auf den Herstellungsaufwand der Ventileinrichtung niederschlägt. Nicht zuletzt bietet die erfindungsgemäße Ausgestaltung überdies die Möglichkeit, eine Befestigungstechnik zu realisieren, bei der die Ventile nicht rechtwinkelig zur Hauptausdehnungsebene der Dichtungseinrichtung installiert werden, sondern parallel dazu, beispielsweise im Rahmen einer Einschubtechnik. Da die Dichtungseinrichtung bei der Montage eines Ventils noch druckentlastet ist, wird beim Einschieben des Ventils die bei konventionellen Dichtungseinrichtungen auftretende Abscherproblematik hinsichtlich vorstehender Dichtungsabschnitte vermieden.

Die Dichtungseinrichtung enthält ein oder mehrere, jeweils eine flächenhafte Ausdehnung aufweisende Dichtungskissen mit mindestens einer internen Beaufschlagungskammer. Das Dichtungskissen wird zwischen Ventil und Ventilträger platziert, wobei es mehrfach durchbrochen ist, um mehrere Fluiddurchtrittsöffnungen zu definieren, durch die hindurch die Fluidverbindung zwischen Ventil und Ventilträger gewährleistet ist. Bei Fluidbeaufschlagung der Beaufschlagungskammer wird das Dichtungskissen um die Fluiddurchtrittsöffnungen herum aufgebläht und, bevorzugt mit flexiblen und insbesondere gummielastischen Wandabschnitten, unter Abdichtung gegen zum einen das zugeordnete Ventil und zum anderen den Ventilträger angepresst.

Vorteilhafte Weiterbildungen der Erfindung gehen aus den Unteransprüchen hervor.

Ist der Ventilträger mit mehreren Ventilen ausgestattet, kann jedem Ventil ein eigenes Dichtungskissen zugeordnet sein. Eine kostengünstigere Herstellung wie auch eine einfachere Anwendung verspricht jedoch eine Bauform, bei der ein eine entsprechend größere Grundfläche aufweisendes Dichtungskissen gleichzeitig mehreren Ventilen zugeordnet ist.

Vorzugsweise enthält ein jeweiliges Dichtungskissen eine einzige mit dem Beaufschlagungsfluid zu beaufschlagende Beaufschlagungskammer, die sich um sämtliche Fluiddurchtrittsöffnungen herum erstreckt. Alternativ wäre allerdings auch ein Mehrkammersystem grundsätzlich denkbar.

Über mindestens einen an die Beaufschlagungskammer angeschlossenen Beaufschlagungskanal kann die Zufuhr und/oder Abfuhr des Beaufschlagungsfluides stattfinden. Der Beaufschlagungskanal kann sich bei Ausgestaltung als Dichtungskissen in einem von dem Dichtungskissen wegragenden rohrstutzenförmigen Fortsatz befinden. Der Fortsatz kann sich hierbei insbesondere rechtwinkelig zur Hauptausdehnungsebene des Dichtungskissens erstrecken.

Bei einer zweckmäßigen Ausgestaltung ist die mindestens eine Beaufschlagungskammer der Dichtungseinrichtung an einen im Ventilträger verlaufenden Speisekanal angeschlossen, über den die Speisung der am Ventilträger angeordneten Ventile mit Druckmedium stattfindet. Somit kann bei fluidischer Inbetriebnahme der Ventileinrichtung gleichzeitig und selbsttätig die Fluidbeaufschlagung der Dichtungseinrichtung hervorgerufen werden. Es erübrigt sich in diesem Fall eine separate Fluidzufuhr. Gleichwohl ist es selbstverständlich möglich, in die Verbindung zwischen Speisekanal und Beaufschlagungskammer ein Steuerventil einzuschalten, mit dem sich die Fluidbeaufschlagung beeinflussen lässt.

Bei einer bevorzugten Ausführungsform ist zwischen Speisekanal und Beaufschlagungskammer ein Rückschlagventil eingeschaltet, dem zur Beaufschlagungskammer hin ein Ablassventil nachgeordnet ist. Durch das Rückschlagventil wird ein unerwünschter Druckabbau in der Beaufschlagungskammer verhindert, wenn im Speisekanal ein unerwünschter oder - beispielsweise wegen kurzzeitigen Abschaltens der Ventileinrichtung - erwünschter Druckabfall auftritt. Für die bewusste Druckentlastung der Beaufschlagungskammer kann das Ablassventil aktiviert werden.

Obgleich sich als Beaufschlagungsfluid prinzipiell jede Fluidart eignet, empfiehlt sich vor allem ein Einsatz von Druckluft. Zweckmäßigerweise wird man dasjenige fluidische Medium verwenden, das sowieso für den Betrieb der Ventileinrichtung verwendet wird.

Die Dichtungseinrichtung kann zwar prinzipiell zumindest teilweise aus einem starren Material bestehen, um eine gewisse Formstabilität hervorzurufen. Besonders kostengünstig erweist sich jedoch eine gesamthafte Ausgestaltung aus einem flexiblen, vorzugsweise über gummielastische Eigenschaften verfügenden Material. Eine gewisse Aussteifung kann hierbei dadurch erzielt werden, dass Wandabschnitte der Dichtungseinrichtung an verschiedenen Stellen, beispielsweise durch Verschweißen, miteinander verbunden werden.

Durch die erfindungsgemäße Ausgestaltung der Dichtungseinrichtung ist eine besonders komfortable Befestigungsmöglichkeit für das mindestens eine Ventil gegeben. Der Ventilträger kann eine sich parallel zu der Hauptausdehnungsebene der Dichtungseinrichtung erstreckende Steckaufnahme aufweisen, in die das betreffende Ventil in einer in dieser Hauptausdehnungsebene oder parallel dazu verlaufenden Montagerichtung einsteckbar ist, sodass senkrecht zu der Montagerichtung ein Formschluss vorliegt. Durch Fluidbeaufschlagung der mindestens einen Beaufschlagungskammer wird die Dichtungseinrichtung in der Wirkungsrichtung des Formschlusses zwischen dem Ventilträger und dem jeweils zugeordneten Ventil verspannt.

Eine besonders einfache Bauform sieht eine nach Art einer Längsnut mit hinterschnittenem Querschnitt gestaltete Steckaufnahme vor, in die das betreffende Ventil mit einem angepassten, insbesondere komplementären Fußabschnitt einsteckbar ist. Die Steckaufnahme kann beispielsweise einen schwalbenschwanzförmigen, sich zum Ventil hin verjüngenden Querschnitt aufweisen.

Die Dichtungseinrichtung ist in diesem Fall zweckmäßigerweise so angeordnet, dass sie die Steckaufnahme an ihrer Unterseite begrenzt. Bei Fluidbeaufschlagung ihrer mindestens einen Beaufschlagungskammer wird die Dichtungseinrichtung in diesem Fall mit der Grundfläche des Fußabschnittes des zugeordneten Ventils verspannt.

Enthält der Ventilträger mehrere zur Halterung je eines Ventils dienende Steckaufnahmen, kann mehreren oder sämtlichen Steckaufnahmen ein gemeinsames Dichtungskissen zugeordnet sein.

Vorzugsweise ist der Ventilträger mehrteilig ausgeführt. Er verfügt dann über einen von dem mindestens einen Ventilträgerkanal durchsetzten Kanalkörper und mindestens einen unter Zwischenfügung der Dichtungseinrichtung daran befestigten Montagekörper, der die mindestens eine Steckaufnahme definiert. Der Montagekörper kann plattenförmig ausgebildet sein, mit einem oder mehreren Langlöchern, die die Steckaufnahme bilden.

Ist ein Ventil rechtwinkelig zur Hauptausdehnungsebene der Dichtungseinrichtung formschlüssig bezüglich des Ventilträgers fixiert, bedarf es keiner zusätzlichen, in dieser Richtung wirksamen Befestigungsmaßnahmen. Es genügt dann, Maßnahmen zu treffen, die ein unbeabsichtigtes Herausziehen des Ventils aus der Steckaufnahme parallel zur Hauptausdehnungsebene der Dichtungseinrichtung verhindern. Hierzu eignet sich insbesondere eine Verriegelungseinrichtung, wobei zweckmäßigerweise jeder Steckaufnahme eine eigenständige Verriegelungseinrichtung zugeordnet ist, um eine individuelle Fixierung der einzelnen Ventile zu ermöglich.

Vorzugsweise ist die mindestens eine Verriegelungseinrichtung so ausgebildet, dass die Verriegelung selbsttätig stattfindet, wenn ein Ventil in die Steckaufnahme eingesteckt wird und ihren angestrebten Platz erreicht hat.

Es handelt sich um lösbare Verriegelungseinrichtungen, sodass bei Bedarf ein rascher, individueller Austausch jedes Ventils möglich ist.

Nachfolgend wird die Erfindung anhand der beiliegenden Zeichnung näher erläutert. In dieser zeigen:

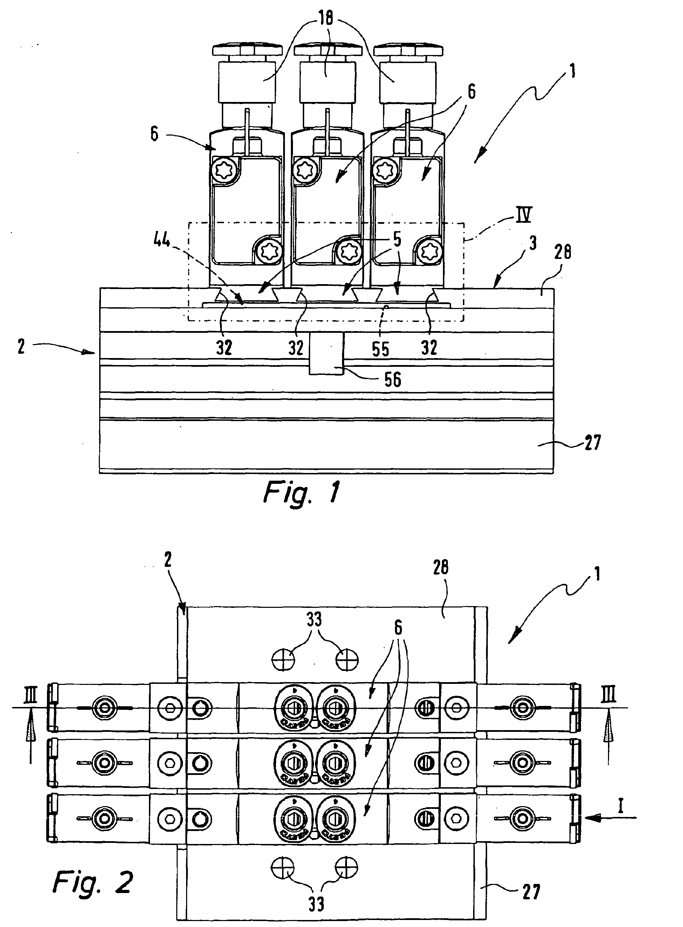

- Figur 1: eine bevorzugte Ausführungsform der erfindungsgemäßen Ventileinrichtung in einer Seitenansicht mit Blickrichtung gemäß Pfeil I aus Figur 2,
- Figur 2: eine Draufsicht der Ventileinrichtung aus Figur 1,

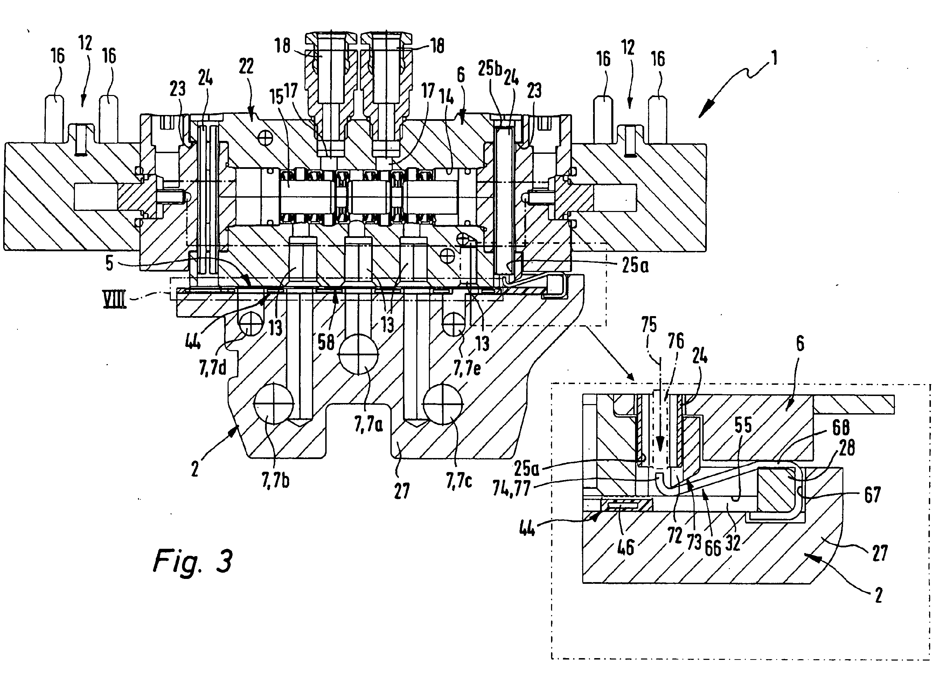

- Figur 3: einen Querschnitt durch die Ventileinrichtung gemäß Schnittlinie III-III aus Figur 1, wobei ein strichpunktiert markierter Ausschnitt zusätzlich vergrößert abgebildet ist,
- Figur 4: den in Figur 1 strichpunktiert umrahmten Ausschnitt IV in einer vergrößerten Darstellung,
- Figur 5: die Ventileinrichtung in einer perspektivischen Darstellung und im nur teilweise mit Ventilen bestückten Zustand des Ventilträgers,

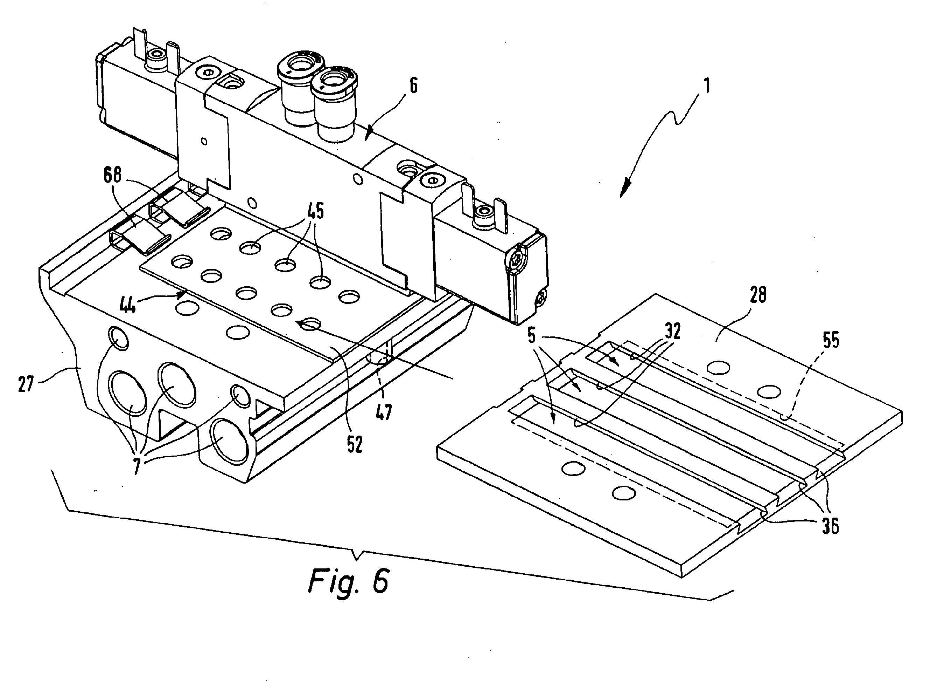

- Figur 6: die Anordnung aus Figur 5 mit separat abgebildeter Montageplatte,
- Figur 7: die Anordnung aus Figur 5 in einer Explosionsdarstellung,
- Figur 8: den in Figur 3 umrahmten Ausschnitt VIII der Ventileinrichtung im Bereich der Dichtungseinrichtung in einer vergrößerten Darstellung, wobei die Dichtungseinrichtung im fluidisch beaufschlagten Zustand gezeigt ist, und
- Figur 9: die Anordnung aus Figur 8 im druckentlasteten Zustand der mindestens einen Beaufschlagungskammer der Dichtungseinrichtung.

Die insgesamt mit Bezugsziffer 1 bezeichnete Ventileinrichtung wird bevorzugt mit Druckluft betrieben und dient zur gesteuerten Verteilung von Druckluft an einen oder mehrere Verbraucher, beispielsweise mittels Fluidkraft betätigbare Antriebe. Die Ventileinrichtung 1 eignet sich jedoch auch für einen Betrieb mit anderen gasförmigen oder mit flüssigen Medien.

Die Ventileinrichtung 1 enthält einen beispielsweise plattenförmigen, in seiner Längsrichtung bei Bedarf auch segmentierten Ventilträger 2, der außen eine Bestückungsfläche 3 aufweist, die in Richtung der Längsachse 4 des Ventilträgers 2 in eine Mehrzahl von Bestückungsplätzen 5 unterteilt ist. An jedem Bestückungsplatz 5 ist individuell ein Ventil 6 lösbar installiert oder installierbar. Das Ventil 6 ist von der elektrisch betätigbaren Art, wobei es sich um ein direkt betätigbares Ventil handeln kann, vorzugsweise jedoch um ein indirekt betätigbares, vorgesteuertes Ventil handelt.

Der Ventilträger 2 ist von mehreren Ventilträgerkanälen 7 durchsetzt, die über ventilträgerseitige Kanalmündungen 8 zu den einzelnen Bestückungsplätzen 5 ausmünden. Über sie erfolgt die fluidische Versorgung und Entsorgung der angebauten Ventile 6. Einer der Ventilträgerkanäle 7 ist ein Speisekanal 7a, der im Betrieb der Ventileinrichtung 1 an eine nicht gezeigte Druckquelle angeschlossen ist, die das für den Betrieb der Ventileinrichtung 1 benötigte Druckmedium liefert. Zwei weitere Ventilträgerkanäle 7 sind Entlastungskanäle oder Entlüftungskanäle 7b, 7c, über die das von den Verbrauchern zurückströmende Druckmedium abgeführt wird. Optional sind auch noch zwei Vorsteuerkanäle 7d, 7e vorhanden, über die die Ventile 6 mit einem für den Betrieb ihrer Vorsteuereinheiten 12 benötigten Druckmedium versorgt werden. Die Vorsteuereinheiten 12 sind beispielsweise Magnetventile.

Die an den Bestückungsplätzen 5 des Ventilträgers 2 installierten Ventile 6 enthalten jeweils mehrere Ventilkanäle 13, die zu einer im installierten Zustand dem Ventilträger 2 zugewandten Grundfläche 14 ausmünden, um in einer gewissen Zuordnung mit den dort gegenüberliegenden ventilträgerseitigen Kanalmündungen 8 zu kommunizieren. Andernends münden die Ventilkanäle 13 in eine im Innern des Ventils 6 ausgebildete Ventilgliedaufnahme 14, in der sich ein zwischen unterschiedlichen Schaltstellungen bewegbares Ventilglied 15 befindet. Das Ventilglied 15 ist exemplarisch durch fluidische Steuersignale umschaltbar, die die Vorsteuereinheiten 12 auf der Basis des über die Vorsteuerkanäle 7d, 7e zugeführten Druckmediums generieren. Angesteuert werden die Vorsteuereinheiten 12 elektrisch über geeignete Schnittstellenmittel 16, wobei eine dort anschließbare elektronische Steuereinrichtung nicht weiter abgebildet ist.

Bei einer direkt betätigten Ventilvariante würde das Ventilglied 15 direkt elektromechanisch aktiviert werden.

Jedes Ventil 6 ist noch von mindestens einem und in der Regel zwei Arbeitskanälen 17 durchsetzt, die von der Ventilgliedaufnahme 14 ausgehen und zu von außen zugänglichen Anschlussmitteln 18 führen, an denen mit den zu betätigenden Verbrauchern verbindbare Fluidleitungen anschließbar sind. Exemplarisch befinden sich die Anschlussmittel 18 direkt am jeweiligen Ventil 6, insbesondere an der dem Ventilträger 2 entgegengesetzten Oberseite. Sie könnten jedoch auch am Ventilträger 2 angeordnet sein, wobei dann die Arbeitskanäle 17 wie die übrigen Ventilkanäle 13 im Bereich der Bestückungsfläche 3 in je einen zum zugeordneten Anschlussmittel 18 führenden Ventilträgerkanal übergehen würde.

Durch entsprechende Aktivierung des Ventils 6 kann jeder Arbeitskanal 17 alternativ mit dem Speisekanal 7a oder einem Entlastungskanal 7b, 7c verbunden werden, um den angeschlossenen Verbraucher zu betätigen.

Das Ventilglied 15 erstreckt sich beim Ausführungsbeispiel in einer Hauptsteuereinheit 22 des betreffenden Ventils 6, an der die Vorsteuereinheiten 12 einenends oder beidenends angebracht sind. Exemplarisch sind die Vorsteuereinheiten 12 in je eine Ausnehmung 23 der Hauptsteuereinheit 22 eingesteckt und mittels eines durchgehend hohlen Spannstiftes 24, der jeweils beide Komponenten durchsetzt, in ihrer Lage fixiert. Jeder Spannstift 24 hat eine dem Ventilträger 2 zugewandte untere Öffnung 25a und eine entgegengesetzte, an der dem Ventilträger 2 entgegengesetzten Oberseite des Ventils 6 zugängliche obere Öffnung 25b.

Zu Gunsten einer einfachen Herstellung der Ventileinrichtung 1 und optimierten Montagemöglichkeit für die Ventile kann der Ventilträger 2 mehrteilig ausgeführt sein. Exemplarisch umfasst er einen die Ventilträgerkanäle 7 enthaltenden Kanalkörper 27, an dem zur Definition der Bestückungsplätze 5 ein bevorzugt plattenförmiger Montagekörper 28 befestigt ist. Der Montagekörper 28 definiert im Bereich der einzelnen Bestückungsplätze 5 je eine Steckaufnahme 32 zur Fixierung eines Ventils 6.

Der Montagekörper 28 ist im Bereich der ventilträgerseitigen Kanalmündungen 8 an den Kanalkörper 27 angesetzt und dort durch Befestigungsmittel 33, beispielsweise Befestigungsschrauben, lösbar fixiert.

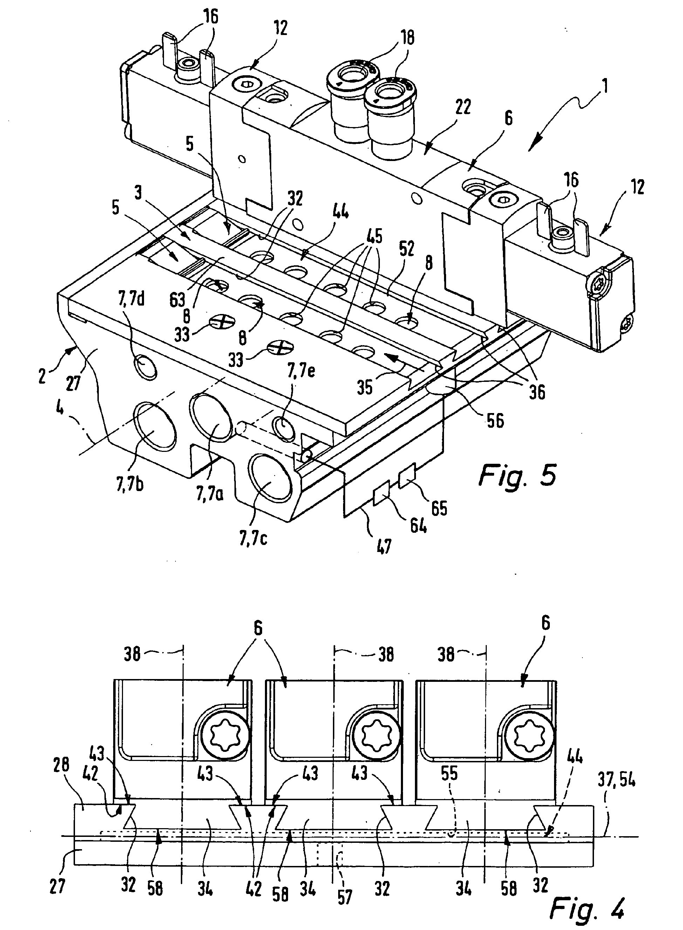

Die Steckaufnahmen 32 sind bevorzugt nach Art von Längsnuten ausgeführt, wobei sie sich unter gegenseitiger Parallelausrichtung rechtwinkelig zu der Längsachse 4 in der Breitenrichtung des Ventilträgers 2 erstrecken. Sie sind von Schlitzen gebildet, die sowohl an ihrer dem Kanalkörper 27 zugewandten Unterseite als auch an der entgegengesetzten Oberseite offen sind. Aus Figur 4 ist gut ersichtlich, dass die Steckaufnahmen 32 einen hinterschnittenen Querschnitt aufweisen, wobei ihre Breite ausgehend von der Oberseite zur Unterseite hin zunimmt. Bevorzugt weisen die Steckaufnahmen 32 einen schwalbenschwanzförmigen Querschnitt auf.

Jedes Ventil 6 verfügt an seiner Unterseite über einen querschnittsmäßig an die Steckaufnahme 32 angepassten Fußabschnitt 34. Es handelt sich insbesondere um komplementäre Querschnitte.

Die Montage eines Ventils 6 am Ventilträger 2 erfolgt dadurch, dass es in einer mit der Längsrichtung der zugeordneten Steckaufnahme 32 zusammenfallenden Montagerichtung 35 eingeschoben wird. Jede Steckaufnahme 32 ist zumindest einenends unter Bildung einer Montageöffnung 36 offen, über die hinweg die Einschubmontage stattfindet.

Im eingeschobenen Zustand liegt zwischen dem Ventil 6 und dem Ventilträger 2 in der zur Hauptausdehnungsebene 37 der Bestückungsfläche 3 senkrechten Hochachse 38 eine formschlüssige Verbindung zwischen Ventil 6 und Ventilträger 2 vor. Ventilträger 2 und Ventil 6 sind in Richtung dieser Hochachse 38 übereinander platziert.

Das in eine Steckaufnahme 32 eingeschobene Ventil 6 kann folglich in Richtung der Hochachse 38 nicht vom Ventilträger 2 abgehoben werden. Die Abstützung zum Ventilträger 2 hin erfolgt über die sich längsseits neben dem Fußabschnitt 34 erstreckenden Bodenflächen 42 jedes Ventils 6, die sich an den die jeweilige Steckaufnahme 32 längsseitig begrenzenden Randflächen 43 des Montagekörpers 28 abstützen können.

Bei der Einschubmontage ist das Ventil 6 durch das Zusammenwirken von Fußabschnitt 34 und Steckaufnahme 32 linear verschiebbar geführt. Die Demontage erfolgt durch Herausziehen des Ventils 6 in einer der Montagerichtung 35 entgegengesetzten Entnahmerichtung.

Zwischen dem Ventilträger 2 und den Ventilen 6 ist eine bevorzugt eine flächenhafte Ausdehnung aufweisende Dichtungseinrichtung 44 angeordnet, die um die sich gegenüberliegenden Mündungen der Ventilträgerkanäle 7 und der Ventilkanäle 13 herum eine fluiddichte Verbindung zwischen Ventilträger 2 und jeweiligem Ventil 6 hervorruft. Somit ist ein unerwünschter Fluidaustritt zur Umgebung, zwischen Ventilträger 2 und Ventilen 6 hindurch, verhindert. Um den Fluidübertritt zwischen Ventilträger 2 und Ventil 6 zu ermöglichen, ist die Dichtungseinrichtung 44 quer zu ihrer Hauptausdehnungsebene von mehreren Fluiddurchtrittsöffnungen 45 durchsetzt, die jeweils mit mindestens einem der Ventilträgerkanäle 7 und mindestens einem der Ventilkanäle 13 kommunizieren.

Die Dichtungseinrichtung 44 ist mehrwandig, insbesondere doppelwandig, ausgeführt und begrenzt in ihrem Innern mindestens eine Beaufschlagungskammer 46, die zur Beaufschlagung mit einem unter Druck stehenden Beaufschlagungsfluid ausgebildet ist. Exemplarisch enthält die Dichtungseinrichtung 44 nur eine einzige Beaufschlagungskammer 46, wenngleich das Innere der Dichtungseinrichtung 44 auch in mehrere solcher Beaufschlagungskammern 46 unterteilt sein könnte. Über mindestens einen mit der Beaufschlagungskammer 46 verbundenen Beaufschlagungskanal 47 kann die Beaufschlagungskammer 46 mit Fluid beaufschlagt und/oder entlastet werden.

Montage und Demontage der Ventile 6 finden bei entlasteter Dichtungseinrichtung 44 statt. Die Fluidbeaufschlagung erfolgt, nachdem die Ventile 6 an ihrem Bestückungsplatz montiert sind. Die Dichtungseinrichtung wird dann durch den in ihr erzeugten Innendruck um die sich gegenüberliegenden Kanalmündungen der Ventilträgerkanäle 7 und Ventilkanäle 18 herum zwischen dem Ventilträger 2 und dem mindestens einen Ventil 6 unter Ausübung einer Dichtwirkung verspannt.

Um die Fluiddurchtrittsöffnungen 45 herum verfügt die Dichtungseinrichtung 44, bevorzugt sowohl an der dem Ventil 6 als auch der dem Ventilträger 2 zugewandten Seite, über eine die Beaufschlagungskammer 46 begrenzende flexible Wandung 48, die ein leichtes Verformen gestattet und ein Anschmiegen an die Gegenflächen von Ventil 6 und Ventilträger 2 begünstigt. Vorzugsweise besteht die Dichtungseinrichtung 44 insgesamt aus einem flexiblen, vorzugsweise über gummielastische Eigenschaften verfügenden Material, beispielsweise NBR (Nitrile Butadiene Rubber).

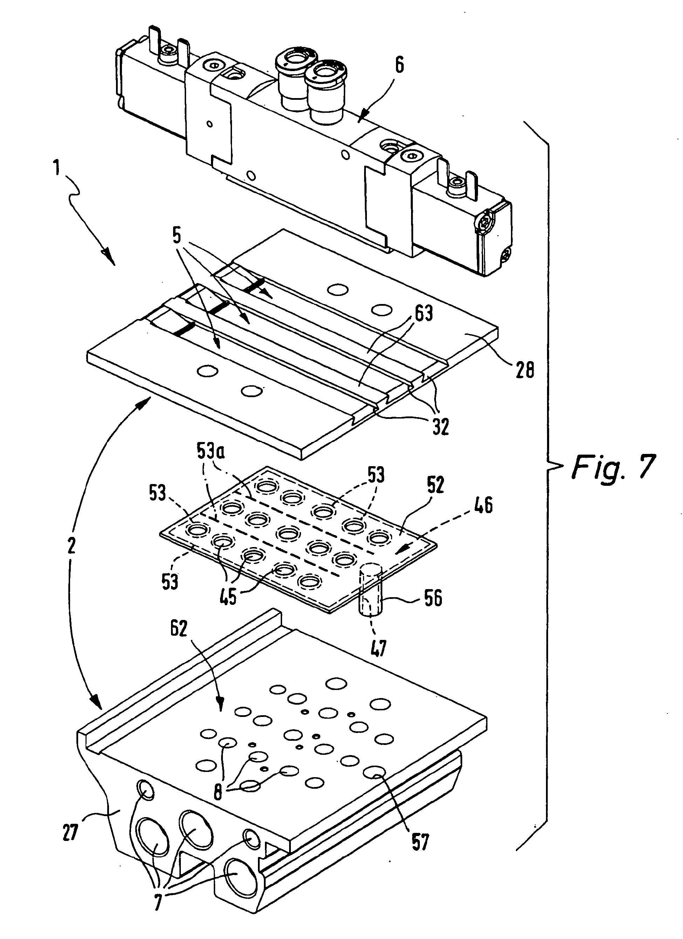

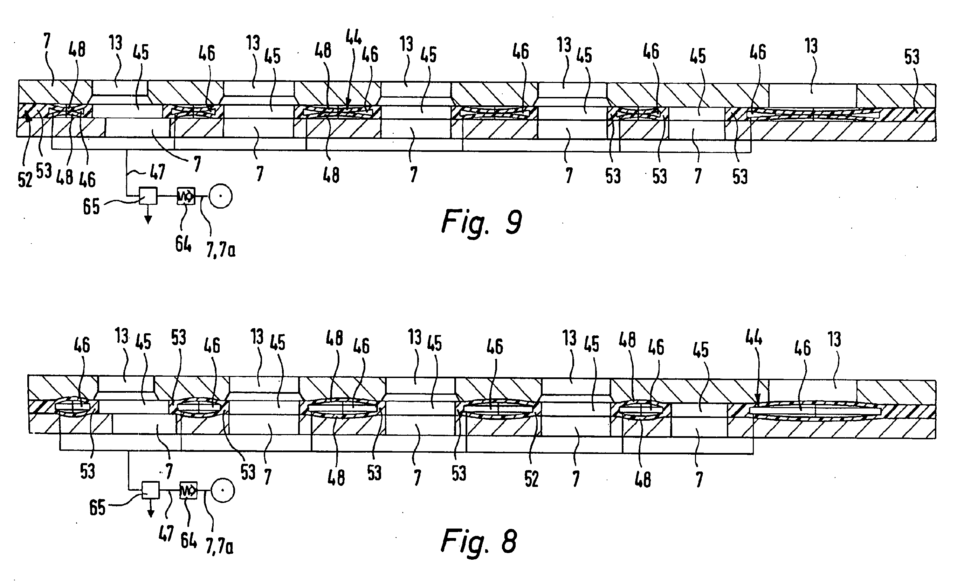

Eine bevorzugte Ausgestaltung sieht vor, dass die Dichtungseinrichtung 44 mindestens ein die eine oder mehreren Beaufschlagungskammern 46 begrenzendes, eine flächenhafte Ausbildung aufweisendes Dichtungskissen 52 enthält. Man könnte von einer matratzenartigen Formgebung sprechen. Dieses Dichtungskissen 52 ist, wie man insbesondere den Figuren 7 bis 9 gut entnehmen kann, unter Bildung der diversen Fluiddurchtrittsöffnungen 45 mehrfach durchbrochen und kann sich bei Fluidbeaufschlägung, um die Fluiddurchtrittsöffnungen 45 herum, zum Anpressen an den Ventilträger 2 und die Ventile 6 aufblähen.

Zweckmäßigerweise umfasst das Dichtungskissen 52 zwei unter Bildung einer dopellagigen Struktur mit parallelen Ebenen nebeneinander angeordnete mattenförmige, flexible Wandungen 48, die um jede Fluiddurchtrittsöffnung 45 herum und entlang ihrer Außenkontur fluiddicht miteinander verbunden sind. Die entsprechenden Verbindungsbereiche sind bei 53 angedeutet. Sie können beispielsweise durch Verkleben oder Verschweißen der beiden mattenförmigen Wandungen 48 erzeugt sein, aber auch durch unmittelbares Aneinanderanformen der Wandungen 48 beim Herstellungsprozess.

Durch die Verbindungsbereiche 53 erfährt das Dichtungskissen 52 eine gewisse Stabilisierung seiner Struktur. Sofern Bedarf besteht, können die beiden Wandungen 48 auch noch an anderen Stellen, insbesondere zwischen den Fluiddurchtrittsöffnungen 45, mittels weiterer Verbindungsbereiche 53a untereinander verbunden sein. Solche weiteren Verbindungsbereiche 53a können auch verwendet werden, um den Innenraum des Dichtungskissens 52 in mehrere Beaufschlagungskammern 46 zu unterteilen.

Es besteht die zusätzliche Möglichkeit, das Dichtungskissen 52 mit gesonderten Versteifungselementen auszustatten und/oder durch eine besondere Strukturierung seiner Oberfläche eine lokale Aussteifung herbeizuführen.

Bevorzugt ist ein einziges Dichtungskissen 52 gleichzeitig sämtlichen Ventilen 6 zugeordnet. Das Dichtungskissen 52 hat in diesem Fall einen ausreichend großen Grundriss, um sich über sämtliche Bestückungsplätze 5 hinweg erstrecken zu können. Der Vorteil einer solchen einteiligen Bauform ist unter anderem eine einfache Herstellung und Montage. Auch die erforderlichen Fluidanschlussmaßnahmen reduzieren sich auf ein Minimum. Gleichwohl besteht prinzipiell die Möglichkeit, jedem Ventil 6 ein eigenes Dichtungskissen 52 oder Gruppen von Ventilen 6 innerhalb der Gesamtanzahl der vorhandenen Ventile 6 ein gemeinsames Dichtungskissen 52 zuzuordnen.

Die Hauptausdehnungsebene 54 des installierten Dichtungskissens 52 verläuft parallel zu derjenigen (37) der Bestückungsfläche 33. Die Hochachsen 38 sind senkrecht zu der Hauptausdehnungsebene 54 orientiert.

Beim Ausführungsbeispiel sitzt das mindestens eine Dichtungskissen 52 zwischen dem Montagekörper 28 und dem Kanalkörper 27. Es ist zwischen diesen beiden Komponenten unverlierbar gefangen. Der plattenförmige Montagekörper 28 kann an seiner Unterseite eine Aussparung 55 aufweisen, in der das Dichtungskissen 52 aufgenommen ist. Dadurch können Montagekörper 28 und Kanalkörper 27 fest miteinander verspannt werden, ohne das Dichtungskissen 52 festzuklemmen.

Der Beaufschlagungskanal 47 verläuft beispielhaft in einem rohrstutzenförmigen Fortsatz 56 des Dichtungskissens 52. Dieser kann stoffschlüssig oder einstückig mit dem Dichtungskissen 52 verbunden sein. Bevorzugt ragt er rechtwinkelig zu der Hauptausdehnungsebene 54 nach unten, von den Ventilen 6 weg, wobei er durch eine in dem Kanalkörper 27 ausgebildete Durchbrechung 57 hindurchgreifen kann.

Jede Beaufschlagungskammer 46 kann mit einem einzigen Beaufschlagungskanal 47 verbunden sein, über den alternativ die Beaufschlagung oder Entlastung der Beaufschlagungskammer 46 abgewickelt wird. Es besteht jedoch ohne weiteres auch die Möglichkeit, eine oder mehrere Beaufschlagungskammern 46 gleichzeitig an mehrere Beaufschlagungskanäle 47 anzuschließen, beispielsweise um eine von Anfang an gleichmäßigere Fluidverteilung zu erzielen und/oder um die Fluideinspeisung und Fluidabfuhr über gesonderte Beaufschlagungskanäle 47 abwickeln zu können.

Indem das Dichtungskissen 52 sandwichartig zwischen Montagekörper 28 und Kanalkörper 27 liegt, bedeckt sie die längsnutartigen Steckaufnahmen 32 an ihrer Unterseite. Sie bildet mithin quasi den Boden der Steckaufnahmen 32 und liegt der Grundfläche 58 des in der zugeordneten Steckaufnahme 32 aufgenommenen Fußabschnittes 34 gegenüber. Die Ausmündungen der mit den Ventilträgerkanälen 7 kommunizierenden Ventilkanäle 13 befinden sich ebenfalls an dieser Grundfläche 58. Dort liegen auch die Fluiddurchtrittsöffnungen 45 des Dichtungskissens 52, deren Durchmesser geringer ist als die Breite der unteren Öffnung der jeweils zugeordneten Steckaufnahme 32.

Wird das Dichtungskissen 52 unter Innendruck gesetzt, bläht es sich im Bereich der Steckaufnahmen 32 in Richtung der Hochachsen 38 auf und drückt mit den die Fluiddurchtrittsöffnungen 45 umgebenden Abschnitten seiner flexiblen Wandungen 48 zum einen gegen die Grundfläche 58 und zum anderen gegen die unter ihr liegende Tragfläche 62 des Kanalkörpers 27. Die zwischen benachbarten Steckaufnahmen 32 verlaufenden Stegabschnitte 63 des Montagekörpers 28 halten die flexible Wandung 48 lokal zurück, sodass sich der Dichtkontakt an den Ventilen 6 auf die Grundfläche 58 im Umfangsbereich der Ausmündungen der Ventilkanäle 13 beschränkt.

Die mindestens eine Beaufschlagungskammer 46 kann individuell mit einem Beaufschlagungsfluid gespeist werden. Die Speisung kann dann insbesondere unabhängig von der Druckfluidversorgung der Ventile 6 der Ventileinrichtung 1 stattfinden. Besondere Vorteile erzielt man jedoch mit der abgebildeten Ausführungsform, bei der die Beaufschlagungskammer 46 aus dem Speisekanal 7a des Ventilträgers 2 mit Beaufschlagungsfluid versorgt wird.

Wie insbesondere aus Figuren 5, 8 und 9 ersichtlich, ist in diesem Fall ein Beaufschlagungskanal 47 vorhanden, der aus dem Speisekanal 7a abzweigt und zur Beaufschlagungskammer 46 führt. Dies ist in der Zeichnung nur schematisch angedeutet. Somit wird das Dichtungskissen 52 stets gleichzeitig mit der Ventileinrichtung 1 mit Druckmedium gespeist. Eine individuelle Ansteuerung erübrigt sich somit.

Ist in den Beaufschlagungskanal 47 ein Rückschlagventil 64 eingeschaltet, das in Richtung zur Beaufschlagungskammer 46 durchlässt und in der Gegenrichtung sperrt, wird erreicht, dass auch bei einem vorübergehenden Druckabfall im Speisekanal 7a der für die Abdichtung notwendige Beaufschlagungsdruck in der Beaufschlagungskammer 46 aufrechterhalten bleibt. Ein zusätzlich zwischen das Rückschlagventil 64 und die Beaufschlagungskammer 46 eingeschaltetes Ablassventil 65 gestattet eine Druckentlastung der Beaufschlagungskammer 46 bei Bedarf, also beispielsweise im Zusammenhang mit einem erforderlichen Austausch eines Ventils 6.

Alternativ oder zusätzlich können auch andere Steuerventilmittel eingesetzt werden, um die Fluidbeaufschlagung der Beaufschlagungskammer 46 zu regulieren.

Es ist nicht zwingend erforderlich, den Beaufschlagungskanal 47 aus dem Speisekanal 7a abzuzweigen. Eine Abzweigung wäre auch aus derjenigen externen Fluidleitung möglich, die dem Speisekanal 7a das für den Betrieb erforderliche Fluid zuführt, beispielsweise unter Verwendung eines in den Fluidleitungsstrang integrierten T-Stückes.

Da die von der Dichtungseinrichtung 44 auf das Ventil 6 einwirkenden Kräfte quer zur Montagerichtung 35 orientiert sind, bedarf es keiner hohen Haltekräfte zur Fixierung des Ventils 6 in der zugeordneten Steckaufnahme 32. Beispielhaft wird daher zur Fixierung eine relativ einfach aufgebaute Verriegelungseinrichtung 66 eingesetzt, die ein unbeabsichtigtes Herausziehen des Ventils 6 aus der Steckaufnahme 32 verhindert. Die Verriegelungseinrichtung 66 ist bevorzugt selbsttätig rastend ausgeführt, sodass für die Montage eines Ventils 6 kein Werkzeug benötigt wird.

Zweckmäßigerweise ist jeder Steckaufnahme 32 eine eigene Verriegelungseinrichtung 66 zugeordnet, die individuell betätigbar ist. Das Aktivieren einer Verriegelungseinrichtung 66 beeinflusst somit die anderen Verriegelungseinrichtungen 66 nicht.

Die beim Ausführungsbeispiel vorhandene Verriegelungseinrichtung 66 enthält ein dem der Montageöffnung 36 entgegengesetzten rückwärtigen Endbereich 67 der Steckaufnahme 32 zugeordnetes federndes Rastglied 68, das bei eingeschobenem Ventil 6 ein ortsfest an diesem angeordnetes Riegelglied 72 an der der Montageöffnung 36 zugewandten Seite hintergreift. Das Riegelglied 72 kann ein vom Ventil 6 nach unten ragender Vorsprung sein.

Beim Einschieben des Ventils 6 in der Montagerichtung 35 trifft das Riegelglied 72 mit einer bevorzugt geneigten Beaufschlagungsfläche 73 auf das federnde Rastglied 68, das bei weiterem Einschieben des Ventils 6 unter federelastischer Verformung an dem Riegelglied 72 abgleitet und bei Erreichen der Endposition des Ventils 6 in die das Riegelglied 72 hintergreifende Position zurückschnappt. Hierbei kommt ein Entriegelungsabschnitt 74 des Riegelgliedes 72 gegenüberliegend der unteren Öffnung 25a des Spannstiftes 24 zu liegen, durch die hindurch gemäß Pfeil 75 ein als Entriegelungswerkzeug fungierender Betätigungsstift 76 einführbar ist. Mit diesem Betätigungsstift 76 lässt sich auf den Entriegelungsabschnitt 74 eine Entriegelungskraft ausüben, die das federelastische Rastglied 68 so weit verbiegt, dass der Hintergriff aufgehoben ist und sich das Ventil 6 wieder herausziehen lässt.

Das Rastglied 72 ist bevorzugt als Federbügel ausgebildet, der an einem Endabschnitt einen Verriegelungshaken 77 aufweist, der in der Verriegelungsstellung hinter das Riegelglied 72 greift. Er kann gleichzeitig den Entriegelungsabschnitt 74 bilden.

Beim Zusammenbau der Ventileinrichtung 1 können die Federbügel stirnseitig auf den Montagekörper 28 aufgerastet werden, bevor dieser an den Kanalkörper 27 angebaut wird.

Die beschriebene Dichtungseinrichtung ist nicht nur für den anlässlich des Ausführungsbeispiels beschriebenen Typ von Ventileinrichtungen nutzbar, bei dem die Ventile 6 parallel zur Bestückungsfläche 3 an ihrem Bestückungsplatz installiert werden. Sie eignet sich auch für Bauformen, bei denen die Ventile 6 in konventioneller Weise, senkrecht zur Bestükkungsfläche 3, installiert und beispielsweise mittels Schrauben fixiert werden. Des Weiteren eignet sich die Dichtungseinrichtung nicht nur für mehrere Ventile enthaltende Ventileinrichtungen, sondern auch für solche Ventileinrichtungen, die nur ein einziges auf einem Ventilträger montiertes Ventil aufweisen.

Die erfindungsgemäße Dichtungseinrichtung hat den Vorteil, dass die Dichtung während des Montageprozesses der Ventile entspannt ist. Dadurch, dass sie aufblasbar ist, kann sie in besonderem Umfang Toleranzen ausgleichen, insbesondere Spalte und Unebenheiten überbrücken. Da die Dichtungseinrichtung bei der Installation eines Ventils nicht mehr zusammengepresst werden muss, ist die Ventilmontage wesentlich erleichtert.

## Patentansprüche

1. Ventileinrichtung, mit einem Ventilträger (2), der mindestens ein Ventil (6) trägt, wobei zwischen dem Ventilträger (2) und dem mindestens einen Ventil (6) eine Dichtungseinrichtung (44) angeordnet ist, die von mindestens einer einen im Ventilträger (2) verlaufenden Ventilträgerkanal (7) mit einem im Ventil (6) verlaufenden Ventilkanal (13) verbindenden Fluiddurchtrittsöffnung (45) durchsetzt ist, **dadurch gekennzeichnet, dass** die Dichtungseinrichtung (44) mindestens eine Beaufschlagungskammer (46) begrenzt, die mit einem unter Druck stehenden Beaufschlagungsfluid beaufschlagbar ist, um ein abdichtendes Verspannen der Dichtungseinrichtung (44) zwischen dem Ventilträger (2) und dem mindestens einen Ventil (6) hervorzurufen, wobei die Dichtungseinrichtung (44) mindestens ein die mindestens eine Beaufschlagungskammer (46) begrenzendes, eine flächenhafte Ausdehnung aufweisendes Dichtungskissen (52) aufweist, das unter Bildung mehrerer Fluiddurchtrittsöffnungen (45) mehrfach durchbrochen ist und das durch die Fluidbeaufschlagung der mindestens einen Beaufschlagungskammer (46) zum Hervorrufen des abdichtenden Verspannens aufblähbar ist.

2. Ventileinrichtung nach Anspruch 1, **dadurch gekennzeichnet, dass** ein einziges Dichtungskissen (52) zur gleichzeitigen Abdichtung des Ventilträgers (2) bezüglich mehrerer von ihm getragener Ventile (6) vorhanden ist.

3. Ventileinrichtung nach Anspruch 1 oder 2, **dadurch gekennzeichnet, dass** das Dichtungskissen (52) eine einzige Beaufschlagungskammer (46) aufweist, die sich um sämtliche Fluiddurchtrittsöffnungen (45) herum erstreckt.

4. Ventileinrichtung nach einem der Ansprüche 1 bis 3, **dadurch gekennzeichnet, dass** die mindestens eine Beaufschlagungskammer (46) mit mindestens einem der Zufuhr und/oder Abfuhr des Beaufschlagungsfluides dienenden Beaufschlagungskanal (47) verbunden ist.

5. Ventileinrichtung nach Anspruch 4, **dadurch gekennzeichnet, dass** der mindestens eine Beaufschlagungskanal (47) einen rohrstutzenförmigen Fortsatz (56) des Dichtungskissens (52) durchsetzt.

6. Ventileinrichtung nach einem der Ansprüche 1 bis 5, **dadurch gekennzeichnet, dass** in dem Ventilträger (2) ein der Speisung des mindestens einen Ventils (6) dienender Speisekanal (7a) verläuft, an den die mindestens eine Beaufschlagungskammer (46) der Dichtungseinrichtung (44) angeschlossen ist.

7. Ventileinrichtung nach Anspruch 6, **dadurch gekennzeichnet, dass** in die Verbindung zwischen dem Speisekanal (7a) und der Beaufschlagungskammer (46) ein zur Beaufschlagungskammer (46) hin durchlassendes und in Gegenrichtung sperrendes Rückschlagventil (64) eingeschaltet ist.

8. Ventileinrichtung nach Anspruch 7, **dadurch gekennzeichnet, dass** zwischen das Rückschlagventil (64) und die Beaufschlagungskammer (46) ein Ablassventil (65) eingeschaltet ist.

9. Ventileinrichtung nach einem der Ansprüche 1 bis 8, **dadurch gekennzeichnet, dass** das Beaufschlagungsfluid Druckluft ist.

10. Ventileinrichtung nach einem der Ansprüche 1 bis 9, **dadurch gekennzeichnet, dass** die mindestens eine Beaufschlagungskammer (46) sowohl an der dem Ventilträger (2) als auch an der dem mindestens einen Ventil (6) zugewandten Seite von einer flexiblen Wandung (48) begrenzt ist.

11. Ventileinrichtung nach einem der Ansprüche 1 bis 10, **dadurch gekennzeichnet, dass** die Dichtungseinrichtung (44) insgesamt aus einem flexiblen, vorzugsweise über gummielastische Eigenschaften verfügenden Material besteht.

12. Ventileinrichtung nach einem der Ansprüche 1 bis 11, **dadurch gekennzeichnet, dass** der Ventilträger (2) und das mindestens eine Ventil (6) in Richtung einer zu der Hauptausdehnungsebene (54) der Dichtungseinrichtung (44) senkrechten Hochachse (38) übereinander angeordnet sind, wobei das Ventil (6) in einer sich parallel zu der Hauptausdehnungsebene (54) der Dichtungseinrichtung (44) erstreckenden Steckaufnahme (32) des Ventilträgers (2) gehalten ist, in die es in einer zu der Hochachse (38) rechtwinkeligen Montagerichtung (35) eingesteckt ist, wobei in Richtung der Hochachse (38) ein Formschluss vorliegt.

13. Ventileinrichtung nach Anspruch 12, **dadurch gekennzeichnet, dass** die Steckaufnahme (32) nach Art einer Längsnut mit hinterschnittenem Querschnitt ausgebildet ist, in die das zuhinterschnittenem Querschnitt ausgebildet ist, in die das zugeordnete Ventil (6) mit einem angepassten Fußabschnitt (34) eingreift.

14. Ventileinrichtung nach Anspruch 12 oder 13, **dadurch gekennzeichnet, dass** die Steckaufnahme (32) einen schwalbenschwanzförmigen Querschnitt aufweist.

15. Ventileinrichtung nach einem der Ansprüche 12 bis 14, **dadurch gekennzeichnet, dass** die Steckaufnahme (32) an ihrer dem Ventil (6) abgewandten Unterseite von der Dichtungseinrichtung (44) begrenzt ist.

16. Ventileinrichtung nach Anspruch 15, **dadurch gekennzeichnet, dass** der Ventilträger (2) mehrere zur Halterung je eines Ventils (6) dienende Steckaufnahmen (32) aufweist, die mit Parallelausrichtung, in einer gemeinsamen Ebene liegend, nebeneinander angeordnet sind und die an ihrer dem zugeordneten Ventil (6) abgewandten Unterseite von einem gemeinsam zugeordneten Dichtungskissen (52) begrenzt sind.

17. Ventileinrichtung nach einem der Ansprüche 12 bis 16, **dadurch gekennzeichnet, dass** der Ventilträger (2) einen von mindestens einem Ventilträgerkanal (7) durchsetzten Kanalkörper (27) und mindestens einen unter Zwischenfügung der Dichtungseinrichtung (44) daran befestigten, die mindestens eine Steckaufnahme (32) definierenden Montagekörper (28) aufweist.

18. Ventileinrichtung nach Anspruch 17, **dadurch gekennzeichnet, dass** der Montagekörper (28) plattenförmig ausgebildet ist.

19. Ventileinrichtung nach einem der Ansprüche 12 bis 18, **dadurch gekennzeichnet, dass** zur lösbaren Fixierung jedes in eine Steckaufnahme (32) eingesetzten Ventils (6) eine Verriegelungseinrichtung (66) vorhanden ist.

20. Ventileinrichtung nach Anspruch 19, **dadurch gekennzeichnet, dass** jede Verriegelungseinrichtung (66) ausgebildet ist, um beim Einstecken eines Ventils (6) in eine Steckaufnahme (32) eine selbsttätige Rastverriegelung hervorzurufen.

21. Ventileinrichtung nach Anspruch 20, **dadurch gekennzeichnet, dass** jede Verriegelungseinrichtung (66) ein einer Steckaufnahme (32) zugeordnetes federndes Rastglied (68) aufweist, das ausgebildet ist, um ein ortsfest am zu fixierenden Ventil (6) angeordnetes Riegelglied (72) zu hintergreifen.

22. Ventileinrichtung nach Anspruch 21, **dadurch gekennzeichnet, dass** das Rastglied (68) als Federbügel ausgebildet ist, der einen Verriegelungshaken (77) aufweist, der das Riegelglied (72) hintergreifen kann und der elastisch biegbar ist, um den Verriegelungseingriff mit dem Riegelglied (72) aufzuheben.

23. Ventileinrichtung nach Anspruch 21 oder 22, **dadurch gekennzeichnet, dass** das Rastglied (68) demjenigen Endbereich der Steckaufnahme (32) zugeordnet ist, der demjenigen Endbereich entgegengesetzt ist, über den hinweg das Ventil (6) bei seiner Montage in die Steckaufnahme (32) einsteckbar ist.

## Claims

1. Valve device with a valve carrier (2) which carries at least one valve (6), wherein there is located between the valve carrier (2) and the valve or valves (6) a sealing device (44) through which passes at least one fluid passage orifice (45) connecting a valve carrier passage (7) running in the valve carrier (2) with a valve passage (13) running in the valve (6), **characterised in that** the sealing device (44) bounds at least one pressurisation chamber (46) which may be supplied with pressurisation fluid which is under pressure in order to produce sealing clamping of the sealing device (44) between the valve carrier (2) and the valve or valves (6), wherein the sealing device (44) has at least one sealing pad (52) bounding the pressurisation chamber or chambers (46) and with a two-dimensional extent, which is pierced through several times to form several fluid passage orifices (45), and which may be inflated by fluid pressurisation of the pressurisation chamber or chambers (46) to generate the sealing clamping.

2. Valve device according to claim 1, **characterised in that** a single sealing pad (52) is provided for simultaneous sealing of the valve carrier (2) in respect of several of the valves (6) which it carries.

3. Valve device according to claim 1 or 2, **characterised in that** the sealing pad (52) has a single pressurisation chamber (46) which extends around all fluid passage orifices (45).

4. Valve device according to any of claims 1 to 3, **characterised in that** at least one pressurisation chamber (46) is connected to at least one pressurisation passage (47) used for the supply and/or removal of the pressurisation fluid.

5. Valve device according to claim 4, **characterised in that** a pipe-socket-like extension (56) of the sealing pad (52) passes through the pressurisation passage or passages(47).

6. Valve device according to any of claims 1 to 5, **characterised in that** a feed passage (7a) serving to supply the the valve or valves (6) and connected to the pressurisation chamber or chambers (46) of the sealing device (44) runs in the valve carrier (2).

7. Valve device according to claim 6, **characterised in that** a non-return valve (64) allowing passage to the pressurisation chamber (46) and blocking it in the reverse direction is interpolated in the connection between the feed passage (7a) and the pressurisation chamber (46).

8. Valve device according to claim 7, **characterised in that** a drain valve (65) is interpolated between the non-return valve (64) and the pressurisation chamber (46).

9. Valve device according to any of claims 1 to 8, **characterised in that** the pressurisation fluid is compressed air.

10. Valve device according to any of claims 1 to 9, **characterised in that** the pressurisation chamber or chambers (46) is or are bounded by a flexible wall (48) both on the side facing the valve carrier (2) and also on the side facing the valve or valves (6).

11. Valve device according to any of claims 1 to 10, **characterised in that** the sealing device (44) is altogether made of a flexible material, preferably with rubber-elastic properties.

12. Valve device according to any of claims 1 to 11, **characterised in that** the valve carrier (2) and the valve or valves (6) are mounted one above the other in the direction of a vertical axis (38) at right-angles to the main extension plane (54) of the sealing device (44), wherein the valve (6) is held in a socket (32) of the valve carrier (2) extending parallel to the main extension plane (54) of the sealing device (44) and in which it is inserted in a mounting direction (35) at right-angles to the vertical axis (38), wherein there is form-fitting in the direction of the vertical axis (38).

13. Valve device according to claim 12, **characterised in that** the socket (32) is in the form of a longitudinal slot with a relief-cut cross-section, in which the cross-section to be relief-cut is formed and in which the assigned valve (6) engages with a matching foot section (34).

14. Valve device according to claim 12 or 13, **characterised in that** the socket (32) has a dovetail-shaped cross-section.

15. Valve device according to any of claims 12 to 14, **characterised in that** the socket (32) is bounded by the sealing device (44) on its underside which faces away from the valve (6).

16. Valve device according to claim 15, **characterised in that** the valve carrier (2) has several sockets (32), each serving to hold one valve (6) and arranged with parallel alignment next to one another in a common plane, and bounded by a commonly assigned sealing pad (52) on their underside facing away from the assigned valve (6).

17. Valve device according to any of claims 12 to 16, **characterised in that** the valve carrier (2) has a passage body (27) through which there passes at least one valve carrier passage (7) and, fastened to the latter with interposition of the sealing device (44), at least one mounting body (28) defining the socket or sockets (32).

18. Valve device according to claim 17, **characterised in that** the mounting body (28) is plate-shaped.

19. Valve device according to any of claims 12 to 18, **characterised in that** a locking device (66) is provided for the releasable fixing of each valve (6) inserted in a socket (32).

20. Valve device according to claim 19, **characterised in that** each locking device (66) is designed to produce an automatic latched locking when a valve (6) is inserted into a socket (32).

21. Valve device according to claim 20, **characterised in that** each locking device (66) has a sprung latching element (68) assigned to a socket (32), in order to engage behind a locking bolt element (72) fitted immovably on the valve (6) to be fixed.

22. Valve device according to claim 21, **characterised in that** the latching element (68) is in the form of a spring bracket with a locking hook (77) which is able to engage behind the locking bolt element (72) and can bend flexibly to cancel out the locking engagement with the locking bolt element (72).

23. Valve device according to claim 21 or 22, **characterised in that** the latching element (68) is assigned to that end section of the socket (32) which is opposite the end section through which the valve (6) may be inserted during its fitting into the socket (32).

## Revendications

1. Dispositif de valve, comprenant un porte-valve (2) qui porte au moins une valve (6), entre le porte-valve (2) et au moins une valve (6) étant disposé un dispositif d'étanchéité (44) qui est traversé par au moins une ouverture de passage fluidique (45) reliant un canal de porte-valve (7) s'étendant dans le porte-valve (2) à un canal de valve (13) s'étendant dans la valve (6), **caractérisé en ce que** le dispositif d'étanchéité (44) délimite au moins une chambre d'alimentation (46) qui peut être alimentée en un fluide d'alimentation sous pression afin de susciter un serrage étanche du dispositif d'étanchéité (44) entre le porte-valve (2) et au moins une valve (6), le dispositif d'étanchéité (44) comportant au moins un coussin étanche (52) présentant une extension plane, délimitant au moins une chambre d'alimentation (46), lequel est percé à plusieurs reprises pour former plusieurs ouvertures de passage fluidique (45) et lequel peut être gonflé par l'alimentation fluidique d'au moins une chambre d'alimentation (46) pour susciter le serrage étanche.

2. Dispositif de valve selon la revendication 1, **caractérisé en ce qu'**un seul coussin étanche (52) est présent pour l'étanchéité simultanée du porte-valve (2) par rapport à plusieurs valves (6) portées par celui-ci.

3. Dispositif de valve selon la revendication 1 ou 2, **caractérisé en ce que** le coussin étanche (52) présente une seule chambre d'alimentation (46) qui s'étend autour de toutes les ouvertures de passage fluidique (45).

4. Dispositif de valve selon l'une quelconque des revendications 1 à 3, **caractérisé en ce qu'**au moins une chambre d'alimentation (46) est reliée à au moins un canal d'alimentation (47) servant à l'amenée et/ou à l'évacuation du fluide d'alimentation.

5. Dispositif de valve selon la revendication 4, **caractérisé en ce qu'**au moins un canal d'alimentation (47) traverse un prolongement en forme de tubulure (56) du coussin étanche (52).

6. Dispositif de valve selon l'une quelconque des revendications 1 à 5, **caractérisé en ce qu'**un canal d'alimentation (7a) servant à l'alimentation d'au moins une valve (6), auquel est raccordée au moins une chambre d'alimentation (46) du dispositif d'étanchéité (44), s'étend dans le porte-valve (2).

7. Dispositif de valve selon la revendication 6, **caractérisé en ce qu'**un clapet antiretour (64) laissant passer vers la chambre d'alimentation (46) et bloquant dans le sens inverse, est inséré dans la liaison entre le canal d'alimentation (7a) et la chambre d'alimentation (46).

8. Dispositif de valve selon la revendication 7, **caractérisé en ce qu'**une valve d'évacuation (65) est insérée entre le clapet antiretour (64) et la chambre d'alimentation (46).

9. Dispositif de valve selon l'une quelconque des revendications 1 à 8, **caractérisé en ce que** le fluide d'alimentation est de l'air comprimé.

10. Dispositif de valve selon l'une quelconque des revendications 1 à 9, **caractérisé en ce qu'**au moins une chambre d'alimentation (46) est délimitée par une paroi flexible (48) non seulement sur le côté tourné vers le porte-valve (2) mais aussi sur le côté tourné au moins vers une valve (6).

11. Dispositif de valve selon l'une quelconque des revendications 1 à 10, **caractérisé en ce que** le dispositif d'étanchéité (44) se compose dans l'ensemble d'un matériau flexible, disposant de préférence des propriétés du caoutchouc élastique.

12. Dispositif de valve selon l'une quelconque des revendications 1 à 11, **caractérisé en ce que** le porte-valve (2) et au moins une valve (6) sont disposés l'un au-dessus de l'autre en direction d'un axe vertical (38) perpendiculaire au plan d'extension principal (54) du dispositif d'étanchéité (44), la valve (6) étant maintenue dans un logement à enfichage (32) s'étendant parallèlement au plan d'extension principal (54) du dispositif d'étanchéité (44) du porte-valve (2), dans lequel elle est enfichée dans un sens de montage (35) perpendiculaire à l'axe vertical (38), une liaison positive se présentant en direction de l'axe vertical (38).

13. Dispositif de valve selon la revendication 12, **caractérisé en ce que** le logement à enfichage (32) est réalisé à la manière d'une rainure longitudinale avec une section contre-dépouillée, dans laquelle la section à contre-dépouiller est réalisée, dans laquelle la valve (6) associée s'engage par une section de pied adaptée (34).

14. Dispositif de valve selon la revendication 12 ou 13, **caractérisé en ce que** le logement à enfichage (32) présente une section en queue d'aronde.

15. Dispositif de valve selon l'une quelconque des revendications 12 à 14, **caractérisé en ce que** le logement à enfichage (32) est délimité sur son côté inférieur éloigné de la valve (6) par le dispositif d'étanchéité (44).

16. Dispositif de valve selon la revendication 15, **caractérisé en ce que** le porte-valve (2) présente plusieurs logements à enficher (32) servant au support d'une valve (6), qui sont disposés les uns à côté des autres dans un plan commun avec une orientation parallèle et qui sont délimités sur leur côté inférieur éloigné de la valve associée (6) par un coussin étanche (52) associé en commun.

17. Dispositif de valve selon l'une quelconque des revendications 12 à 16, **caractérisé en ce que** le porte-valve (2) présente un corps de canal (27) traversé par au moins un canal de porte-valve (7) et au moins un corps de montage (28) définissant au moins un logement à enficher (32), fixé en intercalant le dispositif d'étanchéité (44) dessus.

18. Dispositif de valve selon la revendication 17, **caractérisé en ce que** le corps de montage (28) est réalisé en forme de plaque.

19. Dispositif de valve selon l'une quelconque des revendications 12 à 18, **caractérisé en ce qu'**un dispositif de verrouillage (66) est présent pour la fixation détachable de chaque valve (6) insérée dans un logement à enficher (32).

20. Dispositif de valve selon la revendication 19, **caractérisé en ce que** chaque dispositif de verrouillage (66) est réalisé afin de susciter un verrouillage à crans automatique lors de l'insertion d'une valve (6) dans un logement à enficher (32).

21. Dispositif de valve selon la revendication 20, **caractérisé en ce que** chaque dispositif de verrouillage (66) présente un organe à crans (68) élastique associé à un logement à enficher (32) afin de venir en prise derrière un organe de verrou (72) disposé fixement sur la valve à fixer (6).

22. Dispositif de valve selon la revendication 21, **caractérisé en ce que** l'organe à crans (68) est réalisé comme une bride de ressort présentant un crochet de verrouillage (77) qui peut venir en prise derrière l'organe de verrou (72) et qui est flexible élastiquement afin de supprimer l'engagement de verrouillage avec l'organe de verrou (72).

23. Dispositif de valve selon la revendication 21 ou 22, **caractérisé en ce que** l'organe à crans (68) est associé à la zone d'extrémité du logement à enficher (32) qui est opposée à la zone d'extrémité, au-delà de laquelle la valve (6) peut être insérée dans le logement à enficher (32) lors de son montage.
